# EUROPEAN PATENT SPECIFICATION

(11) **EP 2 195 574 B1**
(45) Date of publication and mention of the grant of the patent: **28.06.2017**
(21) Application number: 08807205.3
(22) Date of filing: 29.09.2008
(51) Int. Cl.: F21V 5/00, G02B 5/02, G03B 21/625

(54) **OPTICAL SCREEN FOR DIRECTING LIGHT BEAMS WITH ELEMENTS HAVING AN OPTIMIZED GEOMETRY**
OPTISCHER SCHIRM ZUM LEITEN VON LICHTSTRAHLEN MIT EINE OPTIMALE GEOMETRIE AUFWEISENDEN ELEMENTEN
ÉCRAN OPTIQUE POUR DIRIGER DES FAISCEAUX LUMINEUX AVEC DES ÉLÉMENTS AYANT UNE GÉOMÉTRIE OPTIMISÉE

(30) Priority: 02.10.2007 IT MI20071887
(43) Date of publication of application: 16.06.2010
(73) Proprietor: iGUZZINI ILLUMINAZIONE S.p.A., 62019 Recanati-Macerata (IT)
(72) Inventor: GUZZINI, Adolfo, I-62019 Recanati (Macerata) (IT); MANCA, Michele, I-73048 Nardo' (Lecce) (IT); GIGLI, Giuseppe, I-00167 Rome (IT)
(74) Representative: Savi, Massimiliano
(86) International application number: PCT/IB2008/002605
(87) International publication number: WO 2009/044263

(56) References cited:
- DE-B- 1 101 803
- US-A- 3 716 709
- US-B1- 6 301 051
- US-B1- 6 958 207

## Description

The present invention relates to an optical screen for the directing of light beams having surfaces with an optimized geometry.

Known optical screens are characterized by the presence of one or more surfaces made up of a plurality of refracting elements for directing and in particular for collimating light beams.

These screens are widely used for suitably modifying the angular distribution of the light intensities produced by sources with a wide emission cone.

In particular, these screens are currently widely applied both in the field of lighting appliances based on the use of incandescence light sources and also in the field of those based on gas-discharge sources.

They are generally suitable for use in all lighting appliances for which an optical system capable of collecting and redistributing the light emitted from one or more sources, is required.

In this case, the optical screens for directing light beams are widely applied to appliances destined for illuminating work environments or areas containing video terminals, for which luminance values are required, on the basis of predefined ergonomic vision criteria regulated by the regulations in force, which are lower than a predetermined threshold, for emission angles higher than a limit angle.

The known optical screens for collimating light beams are generally produced starting from a transparent substrate, consisting, for example, of thermoplastic or glass material.

In order to redirection light beams coming from the light source so that they are emitted from the lighting body with an emission angle within a certain range, this substrate is provided, on the emission surface of the light beams, with a plurality of protuberances, generally in the shape of a cone or pyramid, uniformly distributed over the whole surface. Such a conventional device is disclosed by patent US 3 716 709. Unfortunately, as a side-effect of the deviation of the light beams, the known screens can cause a considerable decrease in the total light flow emitted by the lighting body as a part of these beams is reflected by the protuberances themselves.

An objective of the present invention is to overcome the drawbacks mentioned above and in particular to provide an optical screen for directing light beams which guarantees a good quality of light transmitted and at the same time good effectiveness in controlling the photometric distribution.

A further objective of the present invention is to conceive an optical screen which allows the light beams emitted to be collimated within a wide angular range, also guaranteeing a reduction in the quantity of radiation emitted at high angles, consequently substantially eliminating undesired dazzling effects.

These and other objectives according to the present invention are achieved by providing an optical screen for directing light beams as specified in claim 1.

Further characteristics of the optical screen according to the invention are object of the dependent claims.

The characteristics and advantages of an optical screen for directing light beams according to the present invention will appear more evident from the following illustrative and non-limiting description, referring to the enclosed schematic drawings in which:
- figure 1 is a sectional view of the optical screen according to an example which does not form part of the invention;
- figure 2 is a schematic view of a protuberance present on an optical screen according to an example which does not form part of the invention;
- figure 3 is a schematic view of the protuberance of figure 2 which illustratively represents the variation along its sectional profile of the ranges of the angles of incidence which allow the refraction of light beams;
- figure 4 is a schematic view of a protuberance present on an optical screen according to a second embodiment of the present invention;
- figure 5a is a perspective view from above of the protuberances emerging from a surface of the optical screen according to the invention;
- figure 5b is a raised side view of the screen with protuberances illustrated in figure 5a;
- figure 6 is a schematic representation of a reflection of a light beam in a conical protuberance of an optical screen of the known art;
- figure 7 is a schematic representation of the reflection of a light beam in a protuberance according to figure 2;
- figure 8 is a graph which respectively compares the angular distribution curves of the light intensity emitted from an optical screen of the known art and an optical screen according to the present invention illuminated by a same source;
- figure 9 is a raised side view of an optical screen according to the present invention applied to an OLED device;
- figure 10 is a graph which compares the light intensity values emitted from an OLED device situated on a flat glass substrate and from the same OLED device situated on an optical screen according to the present invention, in relation to the emission angle.

With reference to the figures, these show an optical screen for directing light beams, indicated as a whole with 10.

This screen 10 comprises a substrate 11 made of a transparent material, having a first surface 13 for the inlet of light beams, facing a light source 20, and a second surface 12 for the emission of light beams.

In particular, the first surface 13 can be flat or preferably it can have a matrix of protuberances having nanometric dimensions arranged according to the moth's eye scheme, which give it the characteristic of transmitting almost all the inciding beams, including the beams which are transmitted with high angles of incidence.

According to the invention, the second surface 12 is provided with a plurality of axial-symmetrical protuberances 14 which narrow in the direction perpendicular to the plane of the substrate 11.

These protuberances 14 consist of revolution solids whose generatrix is defined by at least a first curvilinear section 16.

In particular, this first curvilinear section 16 has a concavity facing the interior of the revolution solid 14.

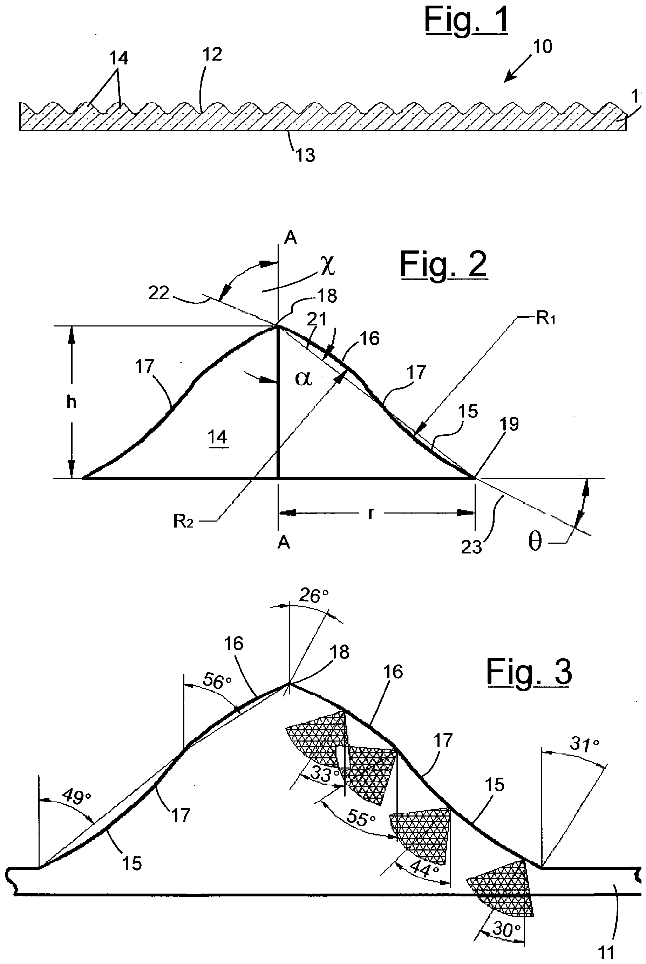

According to an example which does not form part of the invention illustrated in figure 2, the first curvilinear section 16 of the generatrix of the revolution solids 14 has the point of origin belonging to the respective revolution axis A. Furthermore, this generatrix comprises at least a second curvilinear section 15, marked by having an opposite concavity with respect to the first curvilinear section 16, thus forming a substantially bell-like profile of the revolution solid 14.

This second curvilinear section 15 therefore has a concavity facing the outside of the revolution solid 14 and preferably ends in correspondence with the intersection point with the base plane of the substrate 11.

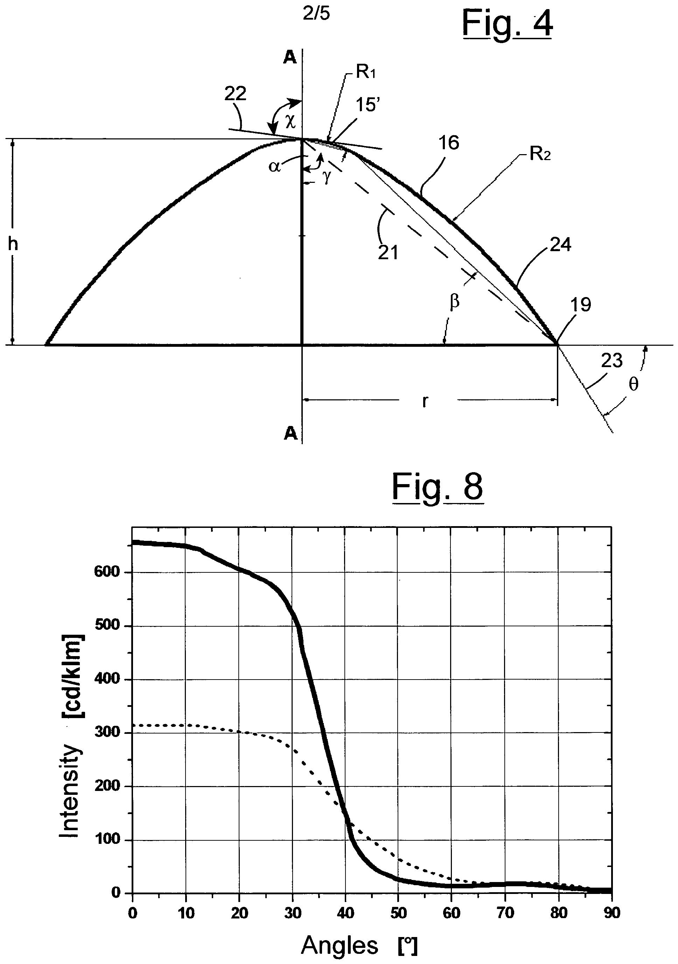

In a second preferred embodiment of the present invention illustrated in figure 4, the generatrix of the revolution solids 14 comprises, in addition to the first curvilinear section 16, at least a second curvilinear section 15' also having a curvature facing the inside of the revolution solid but with a curvature radius R₁ less than the curvature radius R₂ of the first section 16.

This second curvilinear section 15' preferably originates in correspondence with the revolution axis A.

In addition the second curvilinear section 15, 15', said generatrix comprises a straight section 24 terminating in correspondence with the intersection point with the base plane of the substrate 11. The sections 15, 15', 16, 24 of the generatrix can be joined in a point 17 with a common tangent.

In the case of curvilinear sections 16, 15 with opposite concavities, which does not fall under the scope of the claims, said point 17 with a common tangent therefore defines a flexural point in the function describing the profile of the generatrix. In variant embodiments of the invention, not illustrated, the sections 15', 16, 24 of the generatrix are joined in a point 17 which defines a discontinuity in the first derivative of the function describing the profile of the generatrix, such as for example a cusp.

Each of the curvilinear sections 15', 16 consists of one or more curvilinear segments, each of which can be described in Cartesian coordinates by a polynomial of order greater than or equal to two.

With reference to the first example illustrated in figure 2, in each point of the first curvilinear section 16 having a concavity facing the interior, the curvature radius R₂ can have a value ranging from 0.1 h to 100 h, and preferably from 0.5 h to 10 h, wherein h indicates the height of the protuberance 14.

In each second curvilinear section 15 with a concavity facing the outside, the curvature radius R₁ can have values ranging from 0.1 h to 500 h, and preferably from 0.5 h to 50 h.

The angle α, formed between the rotation axis A and the extreme chord 21 subtended to the sections 15, 16 with opposite concavities, can vary within a range of values from 40° to 80°, and preferably between 45° and 60°.

The angle χ that the tangent 22 to the profile in correspondence with the vertex 18 forms with the revolution axis A, ranges from 40° to 90°.

The angle θ between the tangent 23 to the profile in the intersection point 19 with the base plane defined by the substrate 11 and the same base plane can have values ranging from 20° to 60°, and preferably between 35° and 45°.

With reference to the second embodiment illustrated in figure 4, the angle α formed between the rotation axis A and the chord 21 subtended to the sections 15', 16, 24 of the generatrix and the angle χ that the tangent 22 to the profile in correspondence with the vertex 18 forms with the revolution axis A are preferably within the ranges already defined in relation to the example of figure 2.

Furthermore, the curvature radius R₂ of the first curvilinear section 16 can have values within the range defined in relation to the first embodiment but preferably from h and 10 h.

Unlike the first example, the curvature radius R₁ of the second curvilinear section can have values ranging from 0 to 10 h, and preferably from 0.1 h to h.

Furthermore, the angle γ between the chord subtended to the second curvilinear section 15' and the rotation axis A can have values ranging from 75° to 90°, and the angle β between the chord subtended to the first curvilinear section 16 and the straight section 24 and the base plane defined by the substrate 11 can have values ranging from 35° to 75°, and preferably from 45° to 55°.

Finally, the angle θ can have values ranging from 30° to 80°, and preferably from 40° to 60°.

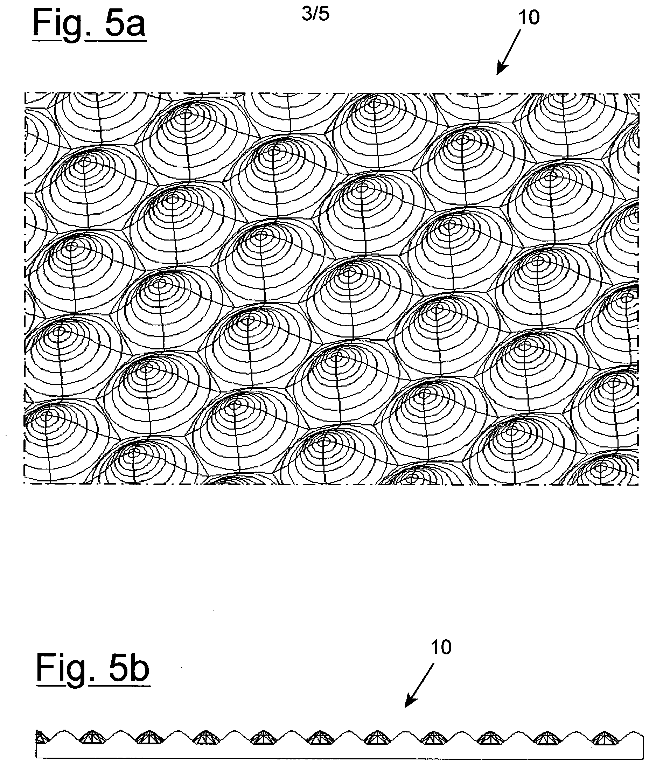

In a preferred embodiment of the invention, as shown in figure 5a, the protuberances 14 are arranged to form a matrix with hexagonal cells so that each protuberance 14 is defined by the intersection of the revolution solid and a parallelepiped with a hexagonal base inscribed in the base circle of the above revolution solid 14.

The protuberances can be analogously arranged to form a matrix with square, pentagonal, octagonal cells, and so forth.

The base radius r of each single revolution element 14 can vary within a range of 0.1 mm to 5 mm, and preferably between 0.5 mm and 2 mm.

Due to the variability of the inclination angle of the tangent line along the profile of the solid, illustratively shown in figure 3 referring to the first embodiment, the optical screen 10, object of the present invention, is capable of receiving and correctly redirecting the light beams 30 having angles of incidence within a very wide range of values, such as, for example, that which characterizes the angular distribution of the light intensity produced by a common fluorescent lamp.

In other words, it can be asserted that the particular conformation of the profile of the generatrices of the revolution solids 14 causes a substantial increase in the performance of the optical screen 10 from which they emerge, at the same time guaranteeing a more effective control of the photometric distribution produced by the same 10.

In addition to this, the use of an optical screen 10 such as that object of the present invention, is also particular advantageous in the case of light sources in the solid state such as, for example, organic electroluminescent devices also called OLED.

These devices are based on the light emission on the part of one or more thin films of organic electroluminescent material after a passage of an electric current and are typically produced by the deposition of various layers on a glass substrate with a flat emission surface.

Due to the effects of internal reflection of the light beams which are diffused in said glass substrate with angles higher than the total internal reflection angle (TIR), the performance of these devices is drastically reduced.

The optical screen 10 according to the present invention allows the light beams emitted from organic electroluminescent devices (OLEDs) which are diffused in the glass substrate with angles higher than the total inner reflection angle (TIR), to be extracted and redirected in order to increase the out-coupling efficiency of these devices.

### FIRST COMPARATIVE EXAMPLE

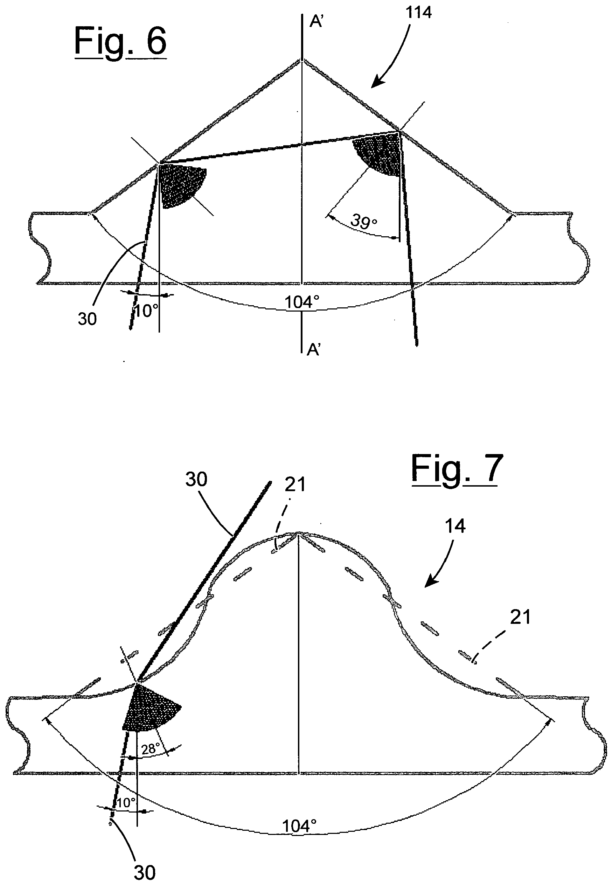

With reference to figure 6, a refracting element 114 is considered, with a conical geometry characteristic of an optical screen of the known art made of polycarbonate, having a refraction index n = 1.59.

In the particular embodiment of figure 6, the refracting element 114 consists of a cone having an angle at the vertex equal to 104°.

Considering, for example, a light beam 30 whose optical path is diffused inside the above refracting element 114 with an inclination of 10° with respect to the axis A', and assuming that it strikes in any point of the profile of the cone on the side with which it forms the lower angle calculated in a clockwise direction, i.e. the left side of the refracting element 114 illustrated in figure 6, this light will be reflected internally by the side surface of the cone.

Polycarbonate does in fact have a total internal reflection angle θ_{TIR} equal to 39°. In practice, if the refracting element is a standard polycarbonate cone with an angle at the vertex equal to 104°, only the beams striking with an angle of incidence ranging from -1° to 77° with respect to the perpendicular to the base plane are refracted, and therefore emitted, by the surface itself.

Let us now consider, on the contrary, with reference to figure 7, an illustrative example of an axial-symmetric protuberance 14 characteristic of the optical screen 10 according to the present invention.

Let us consider an optical screen 10 made of polycarbonate whose surface 12 is characterized by protuberances 14 with a bell profile, according to the embodiment illustrate in figure 7, in which the angle 2α formed between the lines 21 joining the extreme points of the profile is equal to 104°.

Considering, by analogy, also in this case, a light beam 30 which is diffused inside the protuberance 14 with an inclination of 10°, it can be observed that this beam is deviated differently in relation to the position of the incidence point along the profile.

In this case, however, the beam may strike the surface which delimits the protuberance 14 with an angle lower than 39° with respect to the perpendicular to the interface in the point considered and is therefore refracted.

The Applicant obtained further verifications on the validity of the considerations specified above, availing of the help of a software system for tracing the beams that were able to calculate the trends of the light intensity distribution curves of the optical screen 10, object of the present invention, comparing them with those relating to the optics with a conical geometry of the known type.

### SECOND COMPARATIVE EXAMPLE

A light source is considered with a Lambertian distribution situated at a distance of 30 mm from the flat surface of a polycarbonate screen.

The side of the screen opposite the side facing the source is characterized by the presence of a matrix of revolution solids having a height h equal to 1.56 mm and arranged in a hexagonal matrix with a radius r equal to 2 mm.

In a first simulation, the Applicant assumed that these protuberances are cones 114 with an angle at the vertex equal to 104°. The photometric curve obtained is indicated with a dashed line in figure 8.

In a second simulation, the Applicant assumed that these protuberances are revolution solids 14 characterized by a bell profile according to the configuration indicated in figure 2 and by the following values of the relative parameters: α=52°; R₁=3,062mm; R₂=2,617mm; h=1,56mm; χ=68 °; θ=27°.

The photometric curve thus obtained is indicated with a continuous line in figure 8.

From a comparison of the results of the simulations, it can be deduced that the screen 10 according to the present invention, produced with elements 14 having a profile with opposite concavities, is capable of "cutting" the light intensity emitted at angles greater than 45° much more effectively and at the same time guaranteeing a much higher performance with respect to the case of the screen produced with conical protuberances 114 with a conventional geometry.

### THIRD COMPARATIVE EXAMPLE

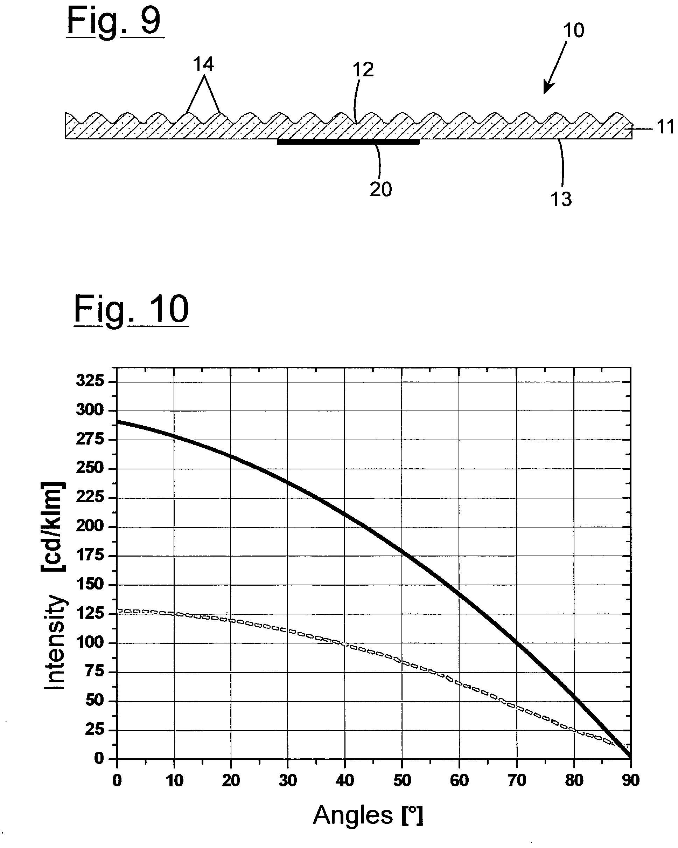

The glass substrate 11 is considered with a refraction index n=1,52 having a thickness of 1 mm illustrated in figure 9.

On a first surface 13 of said substrate 11, there is an organic electroluminescent device (OLED) 20 characterized by a Lambertian distribution of the intensity of the emitted light beams.

On the second surface 12 of the substrate 11, opposite that in contact with the source 20, on the other hand, there is a matrix of protuberances 14 conformed with revolution solids with a hexagonal arrangement having, in the planes containing the revolution axis A, a profile corresponding to that indicated in figure 2.

In particular, the revolution elements 14 are characterized by the following geometrical parameters: α=52° ; R₁=3,062mm; R₂=2,617mm; h=0,976mm; χ=68° ; θ=27°.

Figure 10 shows the values of the intensity of the light beams emitted from the surface 12 in relation to the emission angle.

From the curve having a continuous line, which represents the light intensity emitted from an organic electroluminescent device with Lambertian emission (OLED) 20 situated on the surface 12 of the refracting screen 10 according to the invention provided with a bell protuberance matrix 14, a considerable increase in the quantity of light emitted in the direction perpendicular to the plane of the substrate 11, can be observed.

As a result, the substrate 11, provided with a matrix of protuberances 14 so as to form an optical screen 10 according to the present invention, allows an increase in the out-coupling efficiency of the OLED device 20 in the direction perpendicular to the plane of the substrate 11 equal to a factor 2.25 of the value corresponding to the case in which the outer surface 12 of the above substrate 11 is flat (dashed curve).

The characteristics of the optical screen, object of the present invention, are evident from the above description, as are the relative advantages.

In particular, it is evident that these optical screens are able to guarantee, with respect to screens with elements having a conventional conical geometry currently in use, two significant advantages.

The first consists in an effective control of the quantity of light that can be emitted at high angles, regardless of the angular distribution of the light intensities produced by the source.

The second lies in a considerable increase in the quantity of light transmitted by the protuberances of these screens, i.e. the overall performance of the lighting bodies to which they are applied.

Both of these aspects can be attributed to the capacity of the protuberances with a profile according to the present invention of refracting the light within a wide angular range thanks to a particular conformation of their generatrices.

This characteristic is also associated with a significant increase in the out-coupling efficiency observed in organic electroluminescent devices (OLED) situated on a substrate or optical screen according to the present invention.

Finally, it is evident that the optical screen thus conceived can undergo numerous modifications and variants, all included in the invention; furthermore, all the details can be substituted by technically equivalent elements. The refracting screen according to the present invention, for example, can be coloured in order to colour the light transmitted.

It can also be produced by means of different manufacturing techniques.

According to a preferred embodiment of the invention, the optical screen can be produced with moulding and injection techniques of polymeric materials, in particular polycarbonate and methacrylate, or materials of the sol-gel type, starting from a mould on whose effective surface there is a plurality of cavities conformed so as to reproduce the exact profile of the protuberances 14 in negative. This plurality of cavities on the surface of the mould can in turn be produced with tool processing with the help of machines with numeric control.

The manufacturing method, materials used and also the dimensions adopted for all the parameters characterizing the optical screen, object of the present invention, however, can be subject to any type of modification according to technical requirements.

## Claims

1. An optical screen (10) for directing light beams comprising a substrate (11) having a first surface (13) particularly for the inlet of light beams (30) and a second surface (12) particularly for the emission of light beams (30), at least one of said surfaces (12, 13) of the substrate (11) being provided with a plurality of protuberances (14) which extend in a direction perpendicular to said substrate (11), said protuberances (14) consisting of revolution solids around an axis (A) whose generatrix is defined by at least a first curvilinear section (16) with a concavity facing the inside of said protuberance (14) **characterized in that** said generatrix of said protuberances (14) comprises at least a second curvilinear section (15') having a concavity facing the inside of said protuberance (14) with a curvature radius (R₁) less than the curvature radius (R₂) of said first curvilinear section (16) and a straight line (24) terminating in correspondence with said substrate (11).

2. The optical screen (10) for directing light beams according to claim 1, **characterized in that** said second curvilinear section (15') originates in correspondence with said revolution axis (A).

3. The optical screen (10) for directing light beams according to claim 1 or 2, **characterized in that** said second curvilinear section (15') has in each point, a curvature radius (R₁) ranging from 0 to 10 times said height (h) of the relative protuberance (14).

4. The optical screen (10) for directing light beams according to any of the previous claims, **characterized in that** said first curvilinear section (16) has a curvature radius (R₂) in each point ranging from 0.1 to 100 times the height (h) of the relative protuberance (14), and preferably from 1 to 10 times said height (h) of the relative protuberance (14).

5. The optical screen (10) for directing light beams according to any of the previous claims, **characterized in that**, in the intersection point (19) between the profile of said protuberance (14) and the plane defined by said substrate (11), the tangent to said profile of said protuberance (14) and said plane form an angle (θ) ranging from 30° to 80°, and preferably from 40° to 60°.

6. The optical screen (10) for directing light beams according to any of the previous claims, **characterized in that** the chord subtended to said second curvilinear section (15') and said rotation axis (A) form an angle (γ) ranging from 75° to 90°.

7. The optical screen (10) for directing light beams according to any of the previous claims, **characterized in that** the chord subtended to said first curvilinear section (16) and said straight section (24) and the plane of the base defined by said substrate (11) form an angle (β) ranging from 35° to 75°, and preferably from 45° to 55°.

8. The optical screen (10) for directing light beams according to any of the previous claims, **characterized in that** said curvilinear sections (15, 16; 15', 16) comprise one or more curvilinear sections defined by polynomial of order functions greater than or equal to two.

9. The optical screen (10) for directing light beams according to any of the previous claims, **characterized in that** said first and second curvilinear section (15, 16; 15', 16) are joined in a point (17) with a common tangent.

10. The optical screen (10) for directing light beams according to any of the claims from 1 to 8, **characterized in that** said first and second curvilinear section (15, 16; 15', 16) are joined in a cusp (17).

11. The optical screen (10) for directing light beams according to any of the previous claims, **characterized in that** the rotation axis (A) and an extreme chord subtended to said sections (15, 16; 15', 16, 24) of said generatrix form an angle (α) within the range of values from 40° to 80°.

12. The optical screen (10) for directing light beams according to any of the previous claims, **characterized in that** said protuberances (14) comprise a vertex (18), where the tangent (22) to the profile of said protuberance (14) in correspondence with said vertex (18) forms, with said revolution axis (A), an angle (χ) within the range of 40° to 90°.

13. The optical screen (10) for directing light beams according to any of the previous claims, **characterized in that** said protuberances (14) are arranged to form a matrix with hexagonal cells.

14. The optical screen (10) for directing light beams according to any of the previous claims, **characterized in that** the base radius r of said protuberances (14) is within a range of 0.1 mm to 5 mm, and preferably from 0.5 mm to 2 mm.

15. A lighting body **characterized in that** it comprises at least one light source (20) facing an optical screen (10) for directing light beams according to any of the previous claims, said light source (20) comprising one or more layers of organic electroluminescent material arranged in correspondence of said surface (13) for the inlet of light beams (30).

## Patentansprüche

1. Optischer Schirm (10) zum Leiten von Lichtstrahlen aufweisend eine Trägerschicht (11) mit einer ersten Oberfläche (13) insbesondere für den Eintritt von Lichtstrahlen (30) und einer zweiten Oberfläche (12) insbesondere für den Austritt von Lichtstrahlen (30), wobei mindestens eine der Oberflächen (12, 13) des Trägerwerkstoffes (11) mit einer Vielzahl von Protuberanzen (14) versehen ist, die sich in senkrechter Richtung zu dem Trägerwerkstoff (11) erstrecken und die aus Rotationskörper bezüglich einer Achse (A) bestehen, deren Mantellinie durch mindestens einen ersten kurvenförmigen Abschnitt (16) definiert ist, dessen Konkavität zur Innenseite der Protuberanz (14) zeigt, **dadurch gekennzeichnet, dass** die Mantellinie der Protuberanz (14) mindestens einen zweiten kurvenförmigen Abschnitt (15') aufweist, dessen Konkavität zur Innenseite der Protuberanz (14) zeigt und einen Kurvenradius (R₁), der kleiner ist als der Kurvenradius (R₂) des ersten kurvenförmigen Abschnitts (16), sowie eine gerade Linie (24) aufweist, die entsprechend der Trägerschicht (11) endet.

2. Optischer Schirm (10) zum Leiten von Lichtstrahlen gemäß Anspruch 1, **dadurch gekennzeichnet, dass** der zweite kurvenförmige Abschnitt (15') an der Drehachse (A) beginnt.

3. Optischer Schirm (10) zum Leiten von Lichtstrahlen gemäß Anspruch 1 oder 2, **dadurch gekennzeichnet, dass** der zweite kurvenförmige Abschnitt (15') in jedem Punkt einen Kurvenradius (R₁) hat, der zwischen 0 und 10 mal der Höhe (h) der zugehörigen Protuberanz (14) beträgt.

4. Optischer Schirm (10) zum Leiten von Lichtstrahlen gemäß einem der vorigen Ansprüche, **dadurch gekennzeichnet, dass** der erste kurvenförmige Abschnitt (16) in jedem Punkt einen Kurvenradius (R₂) hat, der zwischen 0,1 und 100 mal der Höhe (h) der zugehörigen Protuberanz (14) beträgt, vorzugsweise zwischen 1 und 10 mal der Höhe (h) der zugehörigen Protuberanz (14) beträgt.

5. Optischer Schirm (10) zum Leiten von Lichtstrahlen gemäß einem der vorigen Ansprüche, **dadurch gekennzeichnet, dass** im Schnittpunkt (19) des Profils der Protuberanz (14) und der durch die Trägerschicht (11) definierten Ebene die Tangente an dieses Profil dieser Protuberanz (14) und diese Ebene einen Winkel (Θ) zwischen 30° und 80°bilden, vorzugsweise zwischen 40° und 60°.

6. Optischer Schirm (10) zum Leiten von Lichtstrahlen gemäß einem der vorigen Ansprüche, **dadurch gekennzeichnet, dass** die Sehne, die durch den zweiten kurvenförmigen Abschnitt (15') aufgespannt wird, und die Rotationsachse (A) einen Winkel (Y) zwischen 75° und 90° bilden.

7. Optischer Schirm (10) zum Leiten von Lichtstrahlen gemäß einem der vorigen Ansprüche, **dadurch gekennzeichnet, dass** die Sehne, die von dem ersten kurvenförmigen Abschnitt (16) zur geraden Linie (24) gespannt wird, mit der Ebene der Basis, die durch die Trägerschicht (11) definiert wird, einen Winkel (β) bildet, der zwischen 35° und 75° liegt, vorzugsweise zwischen 45° und 55°.

8. Optischer Schirm (10) zum Leiten von Lichtstrahlen gemäß einem der vorigen Ansprüche, **dadurch gekennzeichnet, dass** die kurvenförmigen Abschnitte (15, 16; 15', 16) einen oder mehrere kurvenförmige Abschnitte aufweisen, die durch Polynomfunktionen zweiter oder höherer Ordnung definiert sind.

9. Optischer Schirm (10) zum Leiten von Lichtstrahlen gemäß einem der vorigen Ansprüche, **dadurch gekennzeichnet, dass** sich die ersten und zweiten kurvenförmigen Abschnitte (15, 16; 15', 16) in einem Punkt (17) mit einer gemeinsamen Tangente treffen.

10. Optischer Schirm (10) zum Leiten von Lichtstrahlen gemäß einem der Ansprüche 1 bis 8, **dadurch gekennzeichnet, dass** sich die ersten und zweiten kurvenförmigen Querschnitte (15, 16; 15', 16) in einem Scheitelpunkt (17) treffen.

11. Optischer Schirm (10) zum Leiten von Lichtstrahlen gemäß einem der vorigen Ansprüche, **dadurch gekennzeichnet, dass** die Rotationsachse (A) mit einer Sehne, die durch alle Abschnitte (15, 16; 15', 16, 24) der Mantellinie aufgespannt wird, einen Winkel (α) zwischen 40° und 80° bildet.

12. Optischer Schirm (10) zum Leiten von Lichtstrahlen gemäß einem der vorigen Ansprüche, **dadurch gekennzeichnet, dass** die Protuberanzen (14) einen Scheitelpunkt (18) aufweisen, an dem die entsprechende Tangente (22) an das Profil der Protuberanz (14) in dem Scheitelpunkt (18) und die Rotationsachse (A) einen Winkel (*X*) zwischen 40° und 90° bilden.

13. Optischer Schirm (10) zum Leiten von Lichtstrahlen gemäß einem der vorigen Ansprüche, **dadurch gekennzeichnet, dass** die Protuberanzen (14) so angeordnet sind, dass sie eine hexagonale Matrix bilden.

14. Optischer Schirm (10) zum Leiten von Lichtstrahlen gemäß einem der vorigen Ansprüche, **dadurch gekennzeichnet, dass** der Radius r der Grundfläche der Protuberanzen (14) zwischen 0,1 mm und 5 mm liegt, vorzugsweise zwischen 0,5 mm und 2 mm.

15. Leuchtkörper, **dadurch gekennzeichnet, dass** er mindestens eine Lichtquelle (20) aufweist, die zu einem optischen Schirm (10) zum Leiten von Lichtstrahlen gemäß einem der vorigen Ansprüche zeigt, und die Lichtquelle (20) eine oder mehrere Schichten von organischem elektroluminiszentem Material aufweist, die auf der Oberfläche (13) zum Eintritt von Lichtstrahlen (30) angeordnet sind.

## Revendications

1. Ecran optique (10) pour diriger des faisceaux de lumière comprenant un substrat (11) ayant une première surface (13) notamment pour l'entrée de faisceaux de lumière (30) et une seconde surface (12) notamment pour l'émission de faisceaux de lumière (30), au moins l'une desdites surfaces (12, 13) du substrat (11) étant pourvue d'une pluralité de protubérances (14) qui s'étendent dans une direction perpendiculaire audit substrat (11), lesdites protubérances (14) étant constituées de solides de révolution autour d'un axe (A) dont la génératrice est définie par au moins une première section curviligne (16) avec une concavité faisant face à l'intérieur de ladite protubérance (14) **caractérisé en ce que** ladite génératrice desdites protubérances (14) comprend au moins une seconde section curviligne (15') ayant une concavité faisant face à l'intérieur de ladite protubérance (14) avec un rayon de courbure (R₁) inférieur au rayon de courbure (R₂) de ladite première section curviligne (16) et une ligne droite (24) se terminant en correspondance avec ledit substrat (11).

2. Ecran optique (10) pour diriger des faisceaux de lumière selon la revendication 1, **caractérisé en ce que** ladite seconde section curviligne (15') a son origine en correspondance avec ledit axe de révolution (A).

3. Ecran optique (10) pour diriger des faisceaux de lumière selon la revendication 1 ou 2, **caractérisé en ce que** ladite seconde section curviligne (15') a en chaque point, un rayon de courbure (R₁) allant de 0 à 10 fois ladite hauteur (h) de la protubérance (14) relative.

4. Ecran optique (10) pour diriger des faisceaux de lumière selon l'une quelconque des revendications précédentes, **caractérisé en ce que** ladite première section curviligne (16) a un rayon de courbure (R₂) en chaque point allant de 0,1 à 100 fois la hauteur (h) de la protubérance (14) relative, et de préférence de 1 à 10 fois ladite hauteur (h) de la protubérance (14) relative.

5. Ecran optique (10) pour diriger des faisceaux de lumière selon l'une quelconque des revendications précédentes, **caractérisé en ce que**, en le point d'intersection (19) entre le profil de ladite protubérance (14) et le plan défini par ledit substrat (11), la tangente audit profil de ladite protubérance (14) et ledit plan forment un angle (θ) allant de 30° à 80°, et de préférence de 40° à 60°.

6. Ecran optique (10) pour diriger des faisceaux de lumière selon l'une quelconque des revendications précédentes, **caractérisé en ce que** la corde sous-tendue à ladite seconde section curviligne (15') et ledit axe de rotation (A) forment un angle (γ) allant de 75° à 90°.

7. Ecran optique (10) pour diriger des faisceaux de lumière selon l'une quelconque des revendications précédentes, **caractérisé en ce que** la corde sous-tendue à ladite première section curviligne (16) et ladite section droite (24) et le plan de la base définie par ledit substrat (11) forment un angle (β) allant de 35° à 75°, et de préférence de 45° à 55°.

8. Ecran optique (10) pour diriger des faisceaux de lumière selon l'une quelconque des revendications précédentes, **caractérisé en ce que** lesdites sections curvilignes (15, 16 ; 15', 16) comprennent une ou plusieurs sections curvilignes définies par un polynôme de fonctions d'ordre supérieures ou égales à deux.

9. Ecran optique (10) pour diriger des faisceaux de lumière selon l'une quelconque des revendications précédentes, **caractérisé en ce que** lesdites première et seconde sections curvilignes (15, 16 ; 15', 16) sont jointes en un point (17) avec une tangente commune.

10. Ecran optique (10) pour diriger des faisceaux de lumière selon l'une quelconque des revendications 1 à 8, **caractérisé en ce que** lesdites première et seconde sections curvilignes (15, 16 ; 15', 16) sont jointes en une fronce (17).

11. Ecran optique (10) pour diriger des faisceaux de lumière selon l'une quelconque des revendications précédentes, **caractérisé en ce que** l'axe de rotation (A) et une corde extrême sous-tendue auxdites sections (15, 16 ; 15', 16, 24) de ladite génératrice forment un angle (α) dans la plage de valeurs de 40° à 80°.

12. Ecran optique (10) pour diriger des faisceaux de lumière selon l'une quelconque des revendications précédentes, **caractérisé en ce que** lesdites protubérances (14) comprennent un sommet (18), où la tangente (22) au profil de ladite protubérance (14) en correspondance avec ledit sommet (18) forme, avec ledit axe de révolution (A), un angle (χ) dans la plage de 40° à 90°.

13. Ecran optique (10) pour diriger des faisceaux de lumière selon l'une quelconque des revendications précédentes, **caractérisé en ce que** lesdites protubérances (14) sont agencées pour former une matrice avec des cellules hexagonales.

14. Ecran optique (10) pour diriger des faisceaux de lumière selon l'une quelconque des revendications précédentes, **caractérisé en ce que** le rayon de base r desdites protubérances (14) est dans une plage de 0,1 mm à 5 mm, et de préférence de 0,5 mm à 2 mm.

15. Corps d'éclairage **caractérisé en ce qu'**il comprend au moins une source de lumière (20) faisant face à un écran optique (10) pour diriger des faisceaux de lumière selon l'une quelconque des revendications précédentes, ladite source de lumière (20) comprenant une ou plusieurs couches de matériau électroluminescent organique agencées en correspondance de ladite surface (13) pour l'entrée de faisceaux de lumière (30).
